# EUROPEAN PATENT APPLICATION

(11) **EP 4 712 011 A1**
(43) Date of publication of application: **18.03.2026**
(21) Application number: 25787006.3
(22) Date of filing: 23.01.2025
(51) Int. Cl.: G06Q 50/06, B60L 53/66, G01C 21/36, G01C 21/34, G06Q 50/40

(54) **POWER TRADING DEVICE AND METHOD**

(30) Priority: 12.04.2024 KR 20240049059
(71) Applicant: LG Energy Solution, Ltd., Seoul 07335 (KR)
(72) Inventor: KIM, Daesoo, Daejeon 34122 (KR)
(74) Representative: BCKIP Part mbB
(86) International application number: PCT/KR2025/001292
(87) International publication number: WO 2025/216407

(57) **Abstract**

A power trading device according to one embodiment of the present invention may comprise: at least one processor; and memory for storing at least one command that is executed through the at least one processor. The at least one command may include: a command to collect information about electric vehicle (EV) charging stations that can perform charging using photovoltaic (PV) power and driving information about an EV; a command to generate information about recommended EV charging stations, including location information about one or more EV charging stations, using the information about the EV charging stations and the driving information about the EV; a command to transmit the information about the recommended EV charging stations to a management device of the EV and determine whether to carry out a power transaction on the basis of reply information received from the management device of the EV; and a command to provide route information to the management device of the EV when the power transaction is carried out, the route information including the location of the EV charging station with which the power transaction has been carried out.

## Description

### [Technical Field]

This application claims priority to and the benefit of Korean Patent Application No.10-2024-0049059 filed in the Korean Intellectual Property Office on April 12, 2024 the entire contents of which are incorporated herein by reference.

The present invention relates to a power trading apparatus and method, and more particularly, to a power trading apparatus and method for trading power between photovoltaic power generation facilities and electric vehicles.

### [Background Art]

The solar photovoltaic (PV) power generation system is a power generation facility that converts solar light into electrical energy using photovoltaic panels to produce electricity. The electricity produced by a photovoltaic power generation system can be sold by a solar power generation business operator and supplied to the power grid.

Recently, the distribution rate of solar photovoltaic power generation systems has been greatly expanded due to renewable energy policy. Accordingly, a number of cases of excess power supply by solar photovoltaic power generation systems is increasing. In order to stably operate the power grid, frequency and voltage must be maintained at a constant level, but however, the stability of the power grid may significantly be reduced due to fluctuations in frequency and voltage, if an amount of power exceeding demand is supplied to the power grid.

In order to prevent such a decrease in the stability of the power grid, the frequency of using output restrictions (curtailment), which control the generated power of solar photovoltaic power generation systems from being supplied to the power grid, is increasing. In general, when the supply of generated power is blocked due to the output curtailment, the restricted power is not used and lost. Accordingly, if output curtailment occurs frequently, the profitability of users of solar photovoltaic power generation systems may deteriorate.

As a technology to solve these problems, appropriate technologies are needed to support trading of solar photovoltaic power generation (especially excess power generated).

Among the prior art documents relevant to the present invention, KR 10-2023-0094202 is of some relevance.

### [Detailed Description of the Invention]

### [Technical Problem]

To obviate one or more problems of the related art, embodiments of the present disclosure provide a power trading apparatus for trading power between photovoltaic power generation facilities and electric vehicles.

To obviate one or more problems of the related art, embodiments of the present disclosure also provide a method for trading power by the power trading apparatus.

### [Technical Solution]

In order to achieve the objective of the present disclosure, a power trading apparatus according to embodiments of the present invention may include at least one processor and a memory that stores at least one command executed through the processor.

Here, the at least one instruction may include an instruction to collect information on one or more electric vehicle (EV) charging station, that can be charged using photovoltaic (PV) power, and EV operation information; an instruction to generate information on one or more recommended EV charging stations including location information on the one or more recommended EV charging stations, using the information on the one or more EV charging stations and the EV operation information; an instruction to transmit the information on the one or more recommended EV charging stations to a EV management apparatus and to determine whether to conclude a power transaction based on response information received from the EV management apparatus; and an instruction to provide route information including a location of an EV charging station where the power transaction is concluded to an EV management apparatus, upon the conclusion of the power transaction.

The instruction to collect information on the one or more electric vehicle (EV) and the EV operation information may include an instruction to collect information on at least one EV charging station which charges the EV using surplus PV power that cannot be output to a power grid due to output curtailment.

The information on the one or more EV charging station may include at least one of location information of the EV charging station, an amount of PV power that can be supplied, and a power selling price.

The EV operation information may include at least one of location information, charge state information, and operation state information of the electric vehicle.

The instruction to generate information on the recommended EV charging station may include an instruction to select one or more EV charging stations that the electric vehicle is able to arrive at among a plurality of EV charging stations as recommended EV charging stations, based on at least one of the location information and the charge state information of the electric vehicle.

The instruction to generate the information on the one or more recommended EV charging stations may include an instruction to calculate a power transaction price for each of the recommended EV charging stations, based on at least one of an amount of power supply by the recommended EV charging station and an amount of power demand to the recommended EV charging station.

The power transaction price is calculated within a price range that is equal to or higher than a price at which the PV system sells PV power to the power grid and equal to or lower than a general charging price of the EV charging station, and as the amount of power supply is higher, the power transaction price is calculated lower, and as the amount of power demand is higher, the power transaction price is calculated higher.

The instruction to determine whether to conclude the power transaction may include an instruction to transmit the recommended EV charging station information to the EV management apparatus when the electric vehicle is in an operation state.

The instruction to transmit the recommended EV charging station information to the EV management apparatus may include an instruction to determine the operation state of the electric vehicle based on at least one of whether the location of the electric vehicle has changed and whether the electric vehicle is connected to an EV charger; and an instruction to transmit the recommended EV charging station information to the EV management apparatus when the electric vehicle is determined to be in an operation state.

The instruction to provide the route information to the EV management apparatus may include an instruction to generate route guidance information for driving to the EV charging station where the power transaction is concluded and to provide the route guidance information to the EV management apparatus or a route guidance device of the electric vehicle.

The at least one instruction may further include an instruction to transmit power transaction result information to a virtual power plant system that requested output curtailment; and an instruction to receive information on compensation costs corresponding to implementation of the output curtailment from the virtual power plant system.

According to another embodiment of the present disclosure, a power trading method, performed by a power trading apparatus, may include collecting information on one or more electric vehicle (EV) charging station, that can be charged using photovoltaic (PV) power, and EV operation information; generating information on one or more recommended EV charging stations including location information on the one or more recommended EV charging stations, using the information on the one or more EV charging stations and the EV operation information; transmitting the information on the one or more recommended EV charging stations to an EV management apparatus and determining whether to conclude a power transaction based on response information received from the EV management apparatus; and providing route information including a location of an EV charging station where the power transaction is concluded to an EV management apparatus, upon the conclusion of the power transaction.

The collecting information on the one or more electric vehicle (EV) and the EV operation information may include collecting information on at least one EV charging station which charges the electric vehicle using surplus PV power that cannot be output to a power grid due to output curtailment.

The information on the one or more EV charging station may include at least one of location information of the EV charging station, an amount of PV power that can be supplied, and a power selling price.

The EV operation information may include at least one of location information, charge state information, and operation state information of the electric vehicle.

The generating information on the recommended EV charging station may include selecting one or more EV charging stations that the electric vehicle is able to arrive at among a plurality of EV charging stations as recommended EV charging stations, based on at least one of the location information and charge state information of the electric vehicle.

The generating the information on the recommended EV charging station may include calculating a power transaction price for each of the recommended EV charging stations, based on at least one of an amount of power supply by the recommended EV charging stations and an amount of power demand to the recommended EV charging stations.

The power transaction price is calculated within a price range that is equal to or higher than a price at which the PV system sells PV power to the power grid and equal to or lower than a general charging price of the EV charging station, and as the amount of power supply is higher, the power transaction price is calculated lower, and as the amount of power demand is higher, the power transaction price is calculated higher.

The determining whether to conclude the power transaction may include transmitting the recommended EV charging station information to the EV management apparatus when the electric vehicle is in an operation state.

The transmitting the recommended EV charging station information to the EV management apparatus may include determining the operation state of the electric vehicle based on at least one of whether the location of the electric vehicle has changed and whether the electric vehicle is connected to an EV charger; and transmitting the recommended EV charging station information to the EV management apparatus when the electric vehicle is determined to be in an operation state.

The providing the route information to the EV management apparatus may include generating route guidance information for driving to the EV charging station where the power transaction is concluded and to provide the route guidance information to the EV management apparatus or a route guidance device of the electric vehicle.

The method may further include transmitting power transaction result information to a virtual power plant system that requested output curtailment; and receiving information on compensation costs corresponding to implementation of the output curtailment from the virtual power plant system.

### [Advantageous Effects]

According to embodiments of the present disclosure, power trading between photovoltaic power generation facilities and electric vehicles is possible, thereby minimizing the loss of photovoltaic power generation.

In addition, according to the above-described embodiment of the present invention, the operator of the power trading apparatus can obtain additional revenue through compensation corresponding to the implementation of output restrictions.

### [Brief Description of the Drawings]

FIG. 1 is a block diagram for explaining a solar photovoltaic system and an EV charging station according to embodiments of the present invention.
FIG. 2 is a block diagram showing a power trading system according to embodiments of the present invention.
FIG. 3 is a flowchart illustrating a power trading method according to embodiments of the present invention.
FIG. 4 is an example of a screen of an EV management apparatus for explaining recommended EV charging station information according to embodiments of the present invention.
FIG. 5 is an example of a screen of a route guidance device for explaining route guidance information according to embodiments of the present invention.
FIG. 6 is a flowchart illustrating a power trading method according to another embodiment of the present invention.
FIG. 7 is a reference table for explaining compensation costs according to embodiments of the present invention.
FIG. 8 is a block diagram of a power trading apparatus according to embodiments of the present invention.

10: PV system
20: power grid
30: energy storage system
40: EV charging station
100, 800: power trading apparatus
200: virtual power plant system
300: PV management apparatus
400: EV management apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

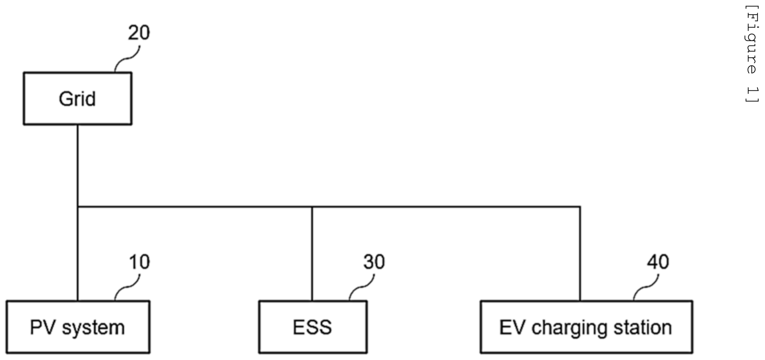

FIG. 1 is a block diagram for explaining a solar photovoltaic system and an EV charging station according to embodiments of the present invention.

A photovoltaic (PV) system 10 according to embodiments of the present invention may be connected to a power grid 20, an energy storage system (ESS) 30, and an electric vehicle (EV) charging station 40.

The PV system 10 may include a photovoltaic module and an AC/DC inverter. Here, the PV system 10 may convert solar light into electric energy to generate power and output the generated PV power to the outside.

The PV system 10 may output PV power to the power grid 20. Here, the PV power may be sold through a power trading system and supplied to the power grid.

The PV system 10 may be connected to the ESS 30 and at least a portion of the PV power may be stored in the ESS 30.

The PV system 10 may be connected to an EV charging station 40, so that at least a portion of the PV power may be supplied to the EV charging station 40. Here, the PV power may be sold through a power trading system and supplied to the EV charging station 40.

Meanwhile, if the ESS 30 is a residential (Home) ESS, the EV charging station 40 may be an EV charging device installed inside or outside the house.

If the PV power cannot be supplied to the power grid 20 due to an external output restriction (curtailment) request, a manager of the PV system 10 may sell surplus PV power through the power trading system and the sold surplus PV power may be supplied to a power device on a buyer's side. For example, if the surplus PV power is sold to a specific EV through the power trading system, the PV system 10 may supply power equivalent to the amount of power sold to the connected EV charging station 40. Thereafter, the EV that purchased the surplus PV power may move to a corresponding EV charging station 40 and be charged with the purchased PV power. For another example, if the surplus PV power produced in a residential PV system 10 is sold to a specific EV through a power trading system, the EV that purchased the surplus PV power may move to an EV charging station 40 of the corresponding home and be charged with the purchased PV power.

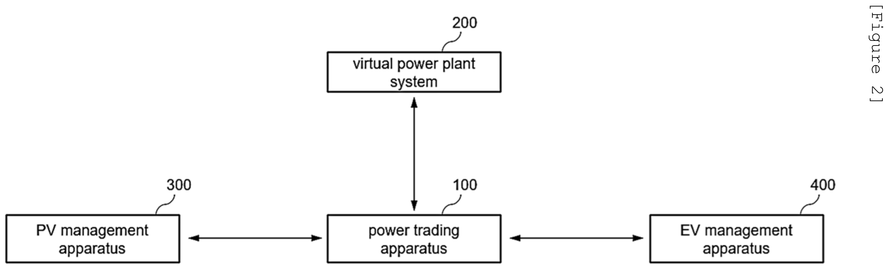

FIG. 2 is a block diagram showing a power trading system according to embodiments of the present invention.

The power trading system may include a power trading apparatus 100, a virtual power plant system 200, a PV management apparatus 300, and an EV management apparatus 400. Here, the power trading apparatus 100 may be connected to the virtual power plant system 200, the PV management apparatus 300, and the EV management apparatus 400 through a network, and may mutually transmit and receive data.

The power trading apparatus 100 may be a computing apparatus that mediates power transactions between power sellers and power buyers and may be managed by a power trading service provider.

The power trading apparatus 100 may receive sales request information for PV power from a plurality of PV power sellers and may post sales information for PV power. In addition, the power trading apparatus 100 may receive purchase request information for PV power from a plurality of PV power buyers and conclude a power transaction with a PV power seller.

The power trading apparatus 100 may include a payment system for cost settlement processing between a power seller and a power buyer, or may be connected to such a payment system.

The power trading apparatus 100 may mediate power transactions between power sellers and power buyers using information on EV charging stations, that can be charged using PV power, and operation information of electric vehicles. For example, the power trading apparatus 100 may select an EV that is currently in operation and provide the corresponding EV with location information or route guidance information of an EV charging station that the EV can arrive at based on the state of charge (SOC) of the selected EV.

The virtual power plant (VPP) system 200 may be a system that comprehensively manages multiple power facilities and may mean a collection of hardware and software required for the operation of a VPP.

Specifically, the virtual power plant system 200 is a system that integrates and operates various distributed resources such as distributed power sources and ESSs as a single power plant using ICT technology. Here, the virtual power plant system 200 may integrate and operate distributed resources that were previously only individually managed, and may improve the accuracy of power generation prediction through combined prediction for distributed resources, thereby improving the stability of the power grid.

The virtual power plant system 200 may request a reduction in power usage to distributed resources connected with the virtual power plant system 200 when the amount of power demand exceeds the power supply, and on the contrary, request output restriction (curtailment) to the distributed resources when the power supply exceeds the power demand, thereby stabilizing the power grid. Here, the virtual power plant system 200 may pay a compensation cost corresponding to the performance of a requested action to a distributed resource that has performed the request.

The PV management apparatus 300 may be an apparatus that manages or controls the PV system in connection with the PV system. Here, the PV management apparatus 300 may collect one or more of power generation information of the PV system, PV power sales information input by a user, and information on EV charging stations linked with the PV system.

The EV management apparatus 400 may be an apparatus that is linked with one or more of the EV and EV charging stations and manages or controls one or more of the EV and EV charging stations. Here, the EV management apparatus 400 may collect one or more of location information of an electric vehicle, charge state information of the electric vehicle, operation state information of the electric vehicle, and charge/discharge state information on the EV charging station linked to the electric vehicle.

The power transaction apparatus 100 may receive information on the EV charging station linked to the PV system from each of the plurality of PV management apparatus 300. Here, the information on EV charging station may include one or more of a location of the EV charging station, an amount of PV power amount that can be supplied, and a power selling price.

The power transaction apparatus 100 may receive EV operation information from each of the plurality of EV management apparatus 400. Here, the EV operation information may include one or more of the location information, charge state information, and operation state information of the electric vehicle.

The power transaction apparatus 100 may mediate a power transaction between a PV power seller and a PV power buyer using the collected information of EV charging station and EV operation. When the power transaction is concluded, the power transaction apparatus 100 may provide route information including the location of an EV charging station where the power transaction has been concluded to the EV management apparatus that purchased the PV power.

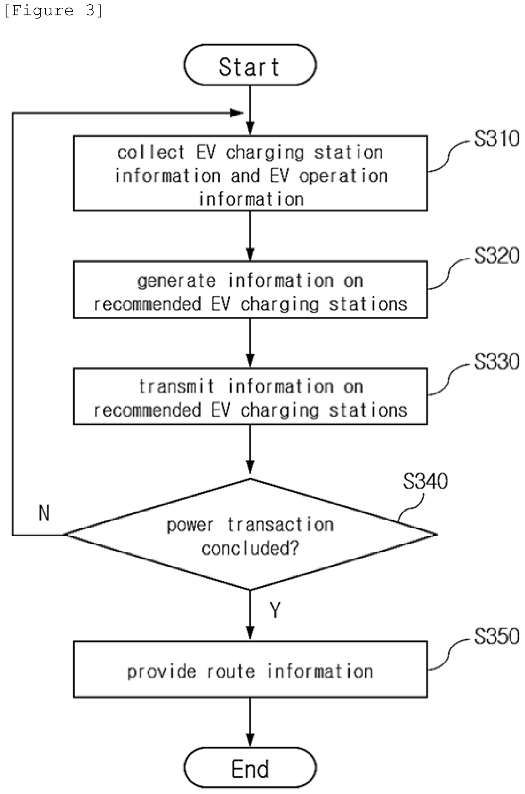

FIG. 3 is a flowchart illustrating a power trading method according to embodiments of the present invention. The power trading method according to embodiments of the present invention may be performed by a power trading apparatus that is connected and communicate with at least one of a virtual power plant system, a PV management apparatus, and an EV management apparatus.

The power trading apparatus may collect EV charging station information and EV operation information (S310).

Specifically, the power trading apparatus may collect information on EV charging stations that can be charged using PV power from a plurality of PV management apparatus. Here, the power trading apparatus may collect information on EV charging stations that charge electric vehicles using surplus PV power that cannot be output to the power grid due to output restriction (curtailment).

The EV charging station information may include at least one of a location, an amount of PV power that can be supplied, and a power selling price for each of the EV charging stations. For example, the EV charging station information may include an identifier of the EV charging station, an address of the EV charging station, a surplus power amount that can be sold (kWh), and a power sale price (KRW/kWh).

The power trading apparatus may receive EV operation information from a plurality of EV management apparatus. Here, the EV operation information may include one or more of EV location information, charge state information, and operation state information. The EV operation information may include data indicating whether the electric vehicle is currently operating. For example, the EV operation information may include location data of the EV charging station, state of charge (SOC), and data indicating whether the electric vehicle is connected to the EV charging station.

The power trading apparatus may generate information on recommended EV charging stations using the EV charging station information and the EV operation information (S320).

The power trading apparatus may select one or more recommended EV charging stations from among multiple EV charging stations based on predetermined selection criteria of the recommended EV charging stations.

The power trading apparatus may select one or more EV charging stations that the electric vehicle can arrive at based on one or more of location information of the electric vehicle, the charge state information of the electric vehicle, and the location information of the EV charging station, and may determine the selected EV charging stations as the recommended EV charging stations.

For example, the power trading apparatus may derive a driving route to the EV charging station using the current location and SOC of the electric vehicle and the location of the EV charging station. Thereafter, the power trading apparatus may calculate the remaining SOC amount when the electric vehicle arrives at the EV charging station according to the calculated driving route, and select the corresponding EV charging station as the recommended EV charging station if the remaining SOC amount is greater than or equal to a predetermined threshold value.

The power trading apparatus may select one or more EV charging stations that the electric vehicle is able to arrive at and that is able to supply power to the electric vehicle based on at least one of location information of the electric vehicle, the EV charge state information of the electric vehicle, desired charge state information input by a user, the location information of the EV charging station, and selling power amount of the EV charging station, and determine the selected one or more EV charging stations as recommended EV charging stations.

For example, the power trading apparatus may derive a driving route to the EV charging station using current location and SOC of the electric vehicle, and the location of the EV charging station. Thereafter, the power trading apparatus may calculate remaining SOC amount in case that the EV arrives at the EV charging station according to the derived driving route, and determine whether the remaining SOC amount is greater than or equal to a predetermined threshold value. In addition, the power trading apparatus may determine whether the electric vehicle can be charged from the remaining SOC amount to a desired SOC (target SOC) using the power sold by the EV charging station. Here, if it is determined that the remaining SOC amount is greater than or equal to the predetermined threshold value and the electric vehicle can be charged to the desired SOC, the power trading apparatus may select the EV charging station as a recommended EV charging station.

The power trading apparatus may generate recommended EV charging station information, which includes location information for each of the selected one or more recommended EV charging stations. Here, the recommended EV charging station information may further include one or more of a PV power selling amount, a surplus PV power selling amount, and a power selling price for each of the selected one or more recommended EV charging stations.

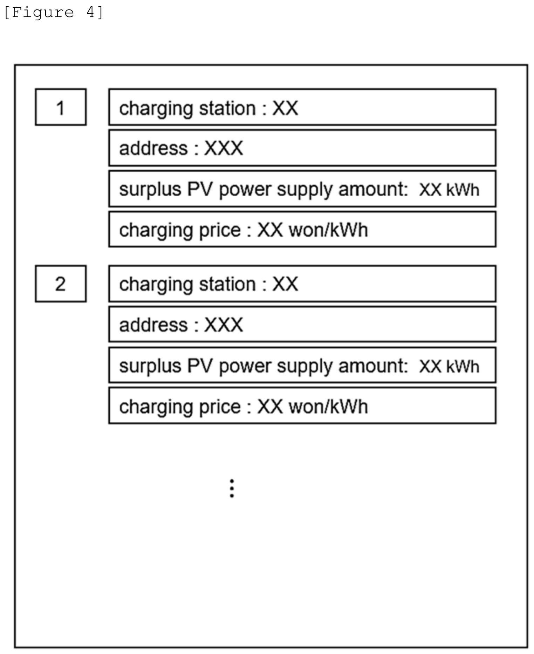

FIG. 4 is an example of a screen of an EV management apparatus for explaining recommended EV charging station information according to embodiments of the present invention.

Referring to FIG. 4, the power transaction apparatus may provide recommended EV charging station information to the EV management apparatus (e.g., a mobile terminal of an EV owner), and the EV management apparatus may output the received recommended EV charging station information on a screen. Here, the recommended EV charging station information may include a business name, an address, a surplus PV power selling amount, and a power transaction price for each of the recommended EV charging stations.

Referring again to FIG. 3, in S320, the power transaction apparatus may calculate a power transaction price for each of the recommended EV charging stations and include the calculated power transaction price in the recommended EV charging station information. In other words, the power transaction price included in the recommended EV charging station information may be a price calculated by the power transaction apparatus, not a sales price input by a seller of PV power.

The power transaction price may be calculated for each of the recommended EV charging stations based on at least one of the power supply amount by the recommended EV charging station and the power demand amount for the recommended EV charging station. Here, the power transaction price may be calculated as a lower price as the power supply is higher and a higher price as the power demand is higher. For example, the power transaction price may be calculated as a lower price as the total power supply sold at the recommended EV charging stations is higher and the power transaction price for a specific recommended EV charging station may be calculated as a higher price as the power demand that wishes to purchase the power supplied by the recommended EV charging station is higher.

The power transaction price may be calculated within a range of a price equal to or higher than a price at which the PV system sells PV power to the power grid and equal to or lower than the general charging price of the EV charging station. For example, if the price at which the PV system sells PV power to the power grid is 200 won/kWh and the general charging price (price when charging with grid power) of the EV charging station is 300 won/kWh, the power transaction price may be calculated within a range of 200 won or more and 300 won or less per kWh. Here, the power transaction price may increase or decrease in response to the power supply and power demand within the above price range.

The power trading apparatus may send the recommended EV charging station information generated in S320 to the EV management apparatus.

The power trading apparatus may determine whether the electric vehicle is in an operation state, and send the recommended EV charging station information to the EV management apparatus only when the EV is in an operation state. Here, the power trading apparatus may determine the operation state of the EV based on at least one of whether the location of the electric vehicle has changed and whether the electric vehicle is connected to an EV charger.

For example, the power trading apparatus may determine whether the electric vehicle is in an operation state or a stopped state by determining whether the location of the electric vehicle changes beyond a predetermined distance based on the location information of the electric vehicle included in the EV operation information collected at predefined times.

For another example, the power trading apparatus may determine whether the electric vehicle is in an operation state or a stopped state based on data (connected state 1, unconnected state 0) indicating whether the electric vehicle is connected to an EV charging station included in the EV operation information.

The power trading apparatus may check the power transaction information between the EV and another power trading apparatus, and if the power transaction between the electric vehicle and the other power trading apparatus is not in progress, the power trading apparatus may send the recommended EV charging station information to the EV management apparatus. On the contrary, if the power transaction between the electric vehicle and another power trading apparatus is in progress, the power trading apparatus may not send the recommended EV charging station information to the EV management apparatus.

The power trading apparatus may determine whether to conclude the power transaction based on response information received from the EV management apparatus (S340).

Specifically, if the response information including data of selecting one of the recommended EV charging stations is received from the EV management apparatus, the power trading apparatus may determine that the power transaction between the electric vehicle and the selected recommended EV charging station has been concluded.

If a specific EV charging station is selected by multiple management apparatuses of electric vehicles, the power trading apparatus may determine the EV management apparatus that first transmitted response information as the target of the power transaction.

If the power transaction is concluded (Y in S340), the power trading apparatus may provide route information including the location of an EV charging station with which the power transaction has been concluded to the EV management apparatus (S350).

The power trading apparatus may generate route guidance information for driving to the EV charging station with which the power transaction has been concluded and provide the route guidance information to the EV management apparatus or a route guidance device of the electric vehicle.

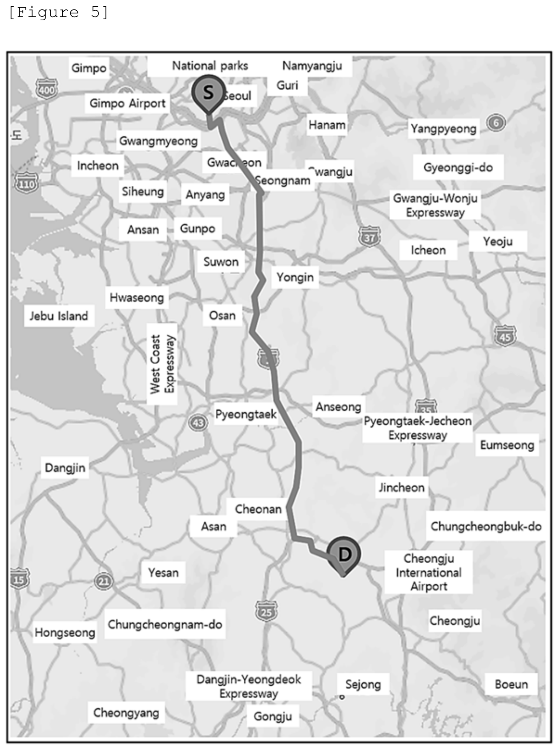

FIG. 5 is an example of a screen of a route guidance device for explaining route guidance information according to embodiments of the present invention.

The route guidance device is a device that outputs a driving route for driving from a starting point to a destination on a screen and provides route guidance. Here, the route guidance device may be linked with an EV or an EV management apparatus. For example, the route guidance device may correspond to a navigation device equipped in an electric vehicle, or may correspond to a mobile terminal of an EV user with a navigation program installed.

In an embodiment, the power transaction apparatus may generate route guidance information for driving from the current location (S) of the electric vehicle to a corresponding EV charging station (D), and provide the route guidance information to the route guidance device. Thereafter, the route guidance device may output the driving route on a map so that the electric vehicle may drive to the destination (D), as illustrated in FIG. 5.

In another embodiment, when the power transaction apparatus transmits route information including the location of an EV charging station with which a power transaction has been concluded to the EV management apparatus, then the EV management apparatus transmits the location of the EV charging station to the route guidance device. Thereafter, the route guidance device may generate route guidance information for driving from the current location (S) of the electric vehicle to the corresponding EV charging station (D), and output the driving route on the map so that the electric vehicle may drive to the destination (D), as illustrated in FIG. 5.

Referring back to FIG. 3, when the electric vehicle moves to the corresponding EV charging station using the route information provided in S350 and charging is completed, the power transaction apparatus may receive transaction completion information including the amount of PV power actually supplied to the electric vehicle from the EV management apparatus or a PV management apparatus. Thereafter, the power transaction apparatus may update pre-stored power transaction result information based on the transaction completion information.

The power transaction result information may include data in which information on multiple power transaction cases is accumulated and stored, and may include executed power transaction amount (kWh) by time interval. Here, the power transaction apparatus may update the executed power transaction amount included in the power transaction result information whenever a power transaction is completed.

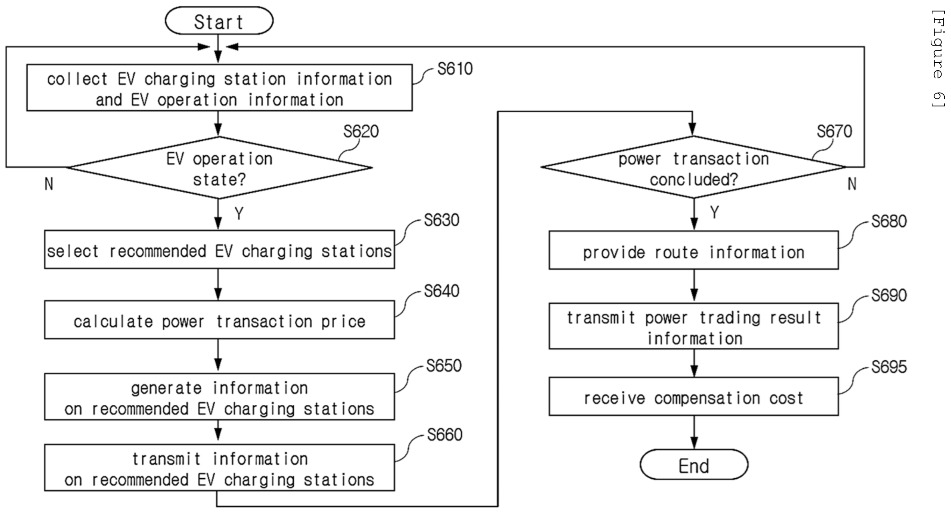

FIG. 6 is a flowchart illustrating a power trading method according to another embodiment of the present invention.

The power trading apparatus may collect EV charging station information and EV operation information (S610).

The EV charging station information may include at least one of location information and the amount of PV power that can be supplied, for each of the EV charging stations.

The EV operation information may include at least one of location information, charge state information, and operation state information of the electric vehicle. The operation state information of the electric vehicle may include data indicating whether the electric vehicle is currently operating.

The power trading apparatus may determine whether the electric vehicle is in operation (S620).

In an embodiment, the power trading apparatus may determine whether the electric vehicle is in operation state or stopped state by determining whether the location of the electric vehicle changes beyond a determined distance based on the EV location information included in the EV operation information collected at a predetermined time interval.

In another embodiment, the power trading apparatus may determine whether the electric vehicle is in operation state or a stopped state based on data (connected state 1, unconnected state 0) indicating whether the electric vehicle is connected to an EV charging station included in the EV operation information.

If the electric vehicle is determined to be in a non-operating state (N of S620), the power trading apparatus may return to S610.

If the EV is determined to be in an operating state (Y of S620), the power trading apparatus may select one or more recommended EV charging stations for the corresponding electric vehicle (S630).

In the embodiment, the power trading apparatus may select one or more EV charging stations that the electric vehicle can arrive at based on one or more of location information of the electric vehicle, the charge state information of the electric vehicle, and location information of the EV charging station, and determine the selected EV charging station as a recommended EV charging station.

For example, the power trading apparatus may derive a driving route to an EV charging station using the current location and SOC of the electric vehicle, and the location of the EV charging station. Thereafter, the power trading apparatus may calculate the remaining SOC amount when the electric vehicle arrives at the EV charging station according to the derived driving route, and if the remaining SOC amount is greater than or equal to a predetermined threshold, the EV charging station may be selected as a recommended EV charging station.

In another embodiment, the power trading apparatus may select one or more EV charging stations that the electric vehicle is able to arrive at and that supply power to the electric vehicle based on one or more of the location information of the electric vehicle, the charge state information of the electric vehicle, desired charge state information input by a user, location information of the EV charging station, and sale power amount of the EV charging station, and determine the selected EV charging station as a recommended EV charging station.

For example, the power trading apparatus may derive a driving route to the EV charging station using the current location and SOC of the electric vehicle, and the location of the EV charging station. Thereafter, the power trading apparatus may calculate an remaining SOC amount when the EV arrives at the EV charging station according to the derived driving route and determine whether the remaining SOC amount is greater than or equal to a predetermined threshold. In addition, the power trading apparatus may determine whether the remaining SOC amount can be charged up to a desired SOC (target SOC) through the power sold at the corresponding EV charging station. Here, if the remaining SOC amount is equal to or greater than the predetermined threshold and it is determined that charging up to the desired SOC is possible, the power trading apparatus may select the corresponding EV charging station as a recommended EV charging station.

The power trading apparatus may calculate the power transaction price for each recommended EV charging station (S640).

In the embodiments, the power transaction price may be calculated for each recommended EV charging station based on at least one of the power supply amount by the recommended EV charging station and the power demand amount for the recommended EV charging station. Here, the power transaction price may be calculated within a range of a price equal to or higher than a price at which the PV system sells PV power to the power grid and equal to or lower than a general charging price of the EV charging station, and the power transaction price may be calculated at a lower price as the power supply amount is higher and be calculated at a higher price as the power demand amount is higher.

The power transaction apparatus may generate recommended EV charging station information including location information, PV power selling amount, and power transaction price for each recommended EV charging station (S650).

The power transaction apparatus may send the recommended EV charging station information to an EV management apparatus (S660).

Here, the power transaction apparatus may check the power transaction information between the electric vehicle and another power transaction apparatus, and if the power transaction between the electric vehicle and another power transaction apparatus is not in progress, the power transaction apparatus may send the recommended EV charging station information to the EV management apparatus. On the contrary, if a power transaction is in progress between the electric vehicle and another power transaction apparatus, the power transaction apparatus may not send the recommended EV charging station information to the EV management apparatus.

The power transaction apparatus may determine whether to conclude the power transaction based on response information received from the EV management apparatus (S670). Here, if the response information including data for selecting one of the recommended EV charging stations is received from the EV management apparatus, the power transaction apparatus may determine that the power transaction between the electric vehicle and the selected recommended EV charging station has been concluded.

If a specific EV charging station is selected by multiple EV management apparatus, the power transaction apparatus may determine the EV management apparatus that first transmitted response information as the target of the power transaction.

If the power transaction is concluded (Y of S670), the power transaction apparatus may provide the EV management apparatus with route information including the location of the EV charging station with which the power transaction has been concluded (S680). In addition, the power transaction apparatus may generate route guidance information for driving to the EV charging station with which the power transaction has been concluded, and provide the route guidance information to the EV management apparatus or a route guidance device of the electric vehicle.

When the EV moves to the corresponding EV charging station using the route information provided in S680 and charging is completed, the power trading apparatus may receive transaction completion information including PV power amount actually supplied to the electric vehicle from the EV management apparatus or a PV management apparatus. Thereafter, the power trading apparatus may update pre-stored power trading result information based on the transaction completion information.

The power trading result information may be data in which information on multiple power trading cases is accumulated and stored, and may include the power transaction amount (kWh) for each time period. Here, the power trading apparatus may update the power transaction amount for each time period included in the power trading result information whenever a power trading case is completed.

The power trading apparatus may transmit the power trading result information to a virtual power plant system that requested output curtailment (S690).

Thereafter, the power trading apparatus may receive information on compensation cost corresponding to the implementation of the output curtailment from the virtual power plant system (S695).

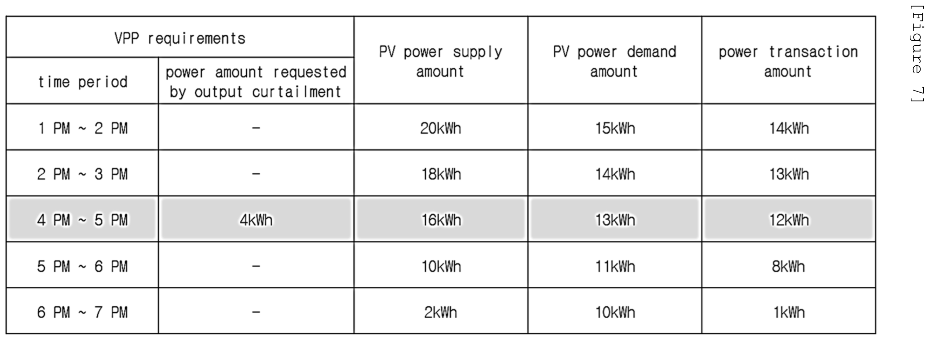

FIG. 7 is a reference table for explaining compensation costs according to embodiments of the present invention.

The power trading apparatus may receive cost compensation from the virtual power plant for the amount of power corresponding to the implementation of the output curtailment among the PV power amounts for which transactions have been completed. For example, as shown in FIG. 7, if PV power amounts of 14 kWh, 13 kWh, 12 kWh, 8 kWh, and 1 kWh have been traded for each 1-hour time interval from 1 p.m. to 7 p.m., the power trading apparatus may receive compensation for cost corresponding to the time period for which the virtual power plant (VPP) system requested output curtailment and the amount of power (4 kWh) required for output curtailment.

Referring back to FIG. 6, the virtual power plant system may calculate the compensation cost by comparing the power transaction amount for each time interval included in the received power transaction result information with the time interval and power amount for which it requested output curtailment, in S695. Thereafter, the power trading apparatus may receive compensation information including the compensation cost from the virtual power plant system.

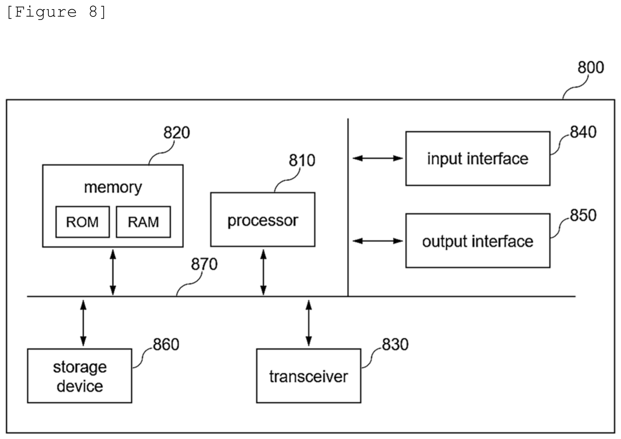

FIG. 8 is a block diagram of a power trading apparatus according to embodiments of the present invention.

The power trading apparatus 800 according to embodiments of the present invention may be a computing apparatus that mediates power transactions between PV power sellers and PV power buyers by linking with at least one of a virtual power plant system, a PV management apparatus, and an EV management apparatus.

The power trading apparatus 800 may include at least one processor 810, a memory 820 that stores at least one command executed through the processor, and a transceiver 830 that is connected to a network and performs communication.

The at least one instruction includes: an instruction to collect information on one or more electric vehicle (EV) charging station, that can be charged using photovoltaic (PV) power, and EV operation information; an instruction to generate information on one or more recommended EV charging stations including location information on the one or more recommended EV charging stations, using the information on the one or more EV charging stations and the EV operation information; an instruction to transmit the information on the one or more recommended EV charging stations to a EV management apparatus and to determine whether to conclude a power transaction based on response information received from the EV management apparatus; and an instruction to provide route information including a location of an EV charging station where the power transaction is concluded to an EV management apparatus, upon the conclusion of the power transaction.

The instruction to collect information on the one or more electric vehicle (EV) and the EV operation information may include an instruction to collect information on at least one EV charging station which charges the EV using surplus PV power that cannot be output to a power grid due to output curtailment.

The information on the one or more EV charging station may include at least one of location information of the EV charging station, an amount of PV power that can be supplied, and a power selling price.

The EV operation information may include at least one of location information, charge state information, and operation state information of the electric vehicle.

The instruction to generate information on the recommended EV charging station may include an instruction to select one or more EV charging stations that the electric vehicle is able to arrive at among a plurality of EV charging stations as recommended EV charging stations, based on at least one of the location information and the charge state information of the electric vehicle.

The instruction to generate the information on the one or more recommended EV charging stations may include an instruction to calculate a power transaction price for each of the recommended EV charging stations, based on at least one of an amount of power supply by the recommended EV charging station and an amount of power demand to the recommended EV charging station.

The power transaction price is calculated within a price range that is equal to or higher than a price at which the PV system sells PV power to the power grid and equal to or lower than a general charging price of the EV charging station, and as the amount of power supply is higher, the power transaction price is calculated lower, and as the amount of power demand is higher, the power transaction price is calculated higher.

The instruction to determine whether to conclude the power transaction may include an instruction to transmit the recommended EV charging station information to the EV management apparatus when the electric vehicle is in an operation state.

The instruction to transmit the recommended EV charging station information to the EV management apparatus may include an instruction to determine the operation state of the electric vehicle based on at least one of whether the location of the electric vehicle has changed and whether the electric vehicle is connected to an EV charger; and an instruction to transmit the recommended EV charging station information to the EV management apparatus when the electric vehicle is determined to be in an operation state.

The instruction to provide the route information to the EV management apparatus may include an instruction to generate route guidance information for driving to the EV charging station where the power transaction is concluded and to provide the route guidance information to the EV management apparatus or a route guidance device of the electric vehicle.

The at least one instruction may further include an instruction to transmit power transaction result information to a virtual power plant system that requested output curtailment; and an instruction to receive information on compensation costs corresponding to implementation of the output curtailment from the virtual power plant system.

The power trading apparatus 800 according to embodiments of the present invention may further include an input interface device 840, an output interface device 850, a storage device 860, etc. Respective components included in the power trading apparatus 800 may be connected by a bus 870 and may communicate with each other.

Here, the processor 810 may mean a central processing unit (CPU), a graphics processing unit (GPU), or a dedicated processor on which methods according to embodiments of the present invention are performed. The memory (or storage unit) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A power trading apparatus comprising:
at least one processor; and
a memory configured to store at least one instruction executed by the at least one processor,
wherein the at least one instruction includes:
an instruction to collect information on one or more electric vehicle EV charging station, that can be charged using photovoltaic PV power, and EV operation information;
an instruction to generate information on one or more recommended EV charging stations including location information on the one or more recommended EV charging stations, using the information on the one or more EV charging stations and the EV operation information;
an instruction to transmit the information on the one or more recommended EV charging stations to a EV management apparatus and to determine whether to conclude a power transaction based on response information received from the EV management apparatus; and
an instruction to provide route information including a location of an EV charging station where the power transaction is concluded to the EV management apparatus, upon the conclusion of the power transaction.

2. The apparatus of claim 1, wherein the instruction to collect information on the one or more electric vehicle EV and the EV operation information includes:
an instruction to collect information on at least one EV charging station which charges the EV using surplus PV power that cannot be output to a power grid due to output curtailment.

3. The apparatus of claim 2, wherein the information on the one or more EV charging station includes at least one of location information of the EV charging station, an amount of PV power that can be supplied, and a power selling price.

4. The apparatus of claim 1, wherein the EV operation information includes at least one of location information, charge state information, and operation state information of the electric vehicle.

5. The apparatus of claim 1, wherein the instruction to generate information on the one or more recommended EV charging station includes:
an instruction to select one or more EV charging stations that the electric vehicle is able to arrive at among a plurality of EV charging stations as recommended EV charging stations, based on at least one of the location information and the charge state information of the electric vehicle.

6. The apparatus of claim 5, wherein the instruction to generate the information on the one or more recommended EV charging stations includes:
an instruction to calculate a power transaction price for each of the recommended EV charging stations, based on at least one of an amount of power supply by the recommended EV charging station and an amount of power demand to the recommended EV charging station.

7. The apparatus of claim 6, wherein the power transaction price is calculated within a price range that is equal to or higher than a price at which the PV system sells PV power to a power grid and equal to or lower than a general charging price of the EV charging station,
as the amount of power supply is higher, the power transaction price is calculated lower, and
as the amount of power demand is higher, the power transaction price is calculated higher.

8. The apparatus of claim 1, wherein the instruction to determine whether to conclude the power transaction includes:
an instruction to transmit information on the one or more recommended EV charging station to the EV management apparatus when the electric vehicle is in an operation state.

9. The apparatus of claim 8, wherein the instruction to transmit information on the one or more recommended EV charging station to the EV management apparatus includes:
an instruction to determine the operation state of the electric vehicle based on at least one of whether the location of the electric vehicle has changed and whether the electric vehicle is connected to an EV charger; and
an instruction to transmit information on the one or more recommended EV charging station to the EV management apparatus when the electric vehicle is determined to be in an operation state.

10. The apparatus of claim 8, wherein the instruction to provide the route information to the EV management apparatus includes: an instruction to generate route guidance information for driving to the EV charging station where the power transaction is concluded and to provide the route guidance information to the EV management apparatus or a route guidance device of the electric vehicle.

11. The apparatus of claim 1, wherein the at least one instruction includes:
an instruction to transmit power transaction result information to a virtual power plant system that requested output curtailment; and
an instruction to receive information on compensation costs corresponding to implementation of the output curtailment from the virtual power plant system.

12. A power trading method performed by a power trading apparatus, the method comprising:
collecting information on one or more electric vehicle EV charging station, that can be charged using photovoltaic PV power, and EV operation information;
generating information on one or more recommended EV charging stations including location information on the one or more recommended EV charging stations, using the information on the one or more EV charging stations and the EV operation information;
transmitting the information on the one or more recommended EV charging stations to an EV management apparatus and determining whether to conclude a power transaction based on response information received from the EV management apparatus; and
providing route information including a location of an EV charging station where the power transaction is concluded to the EV management apparatus, upon the conclusion of the power transaction.

13. The method of claim 12, wherein the collecting information on the one or more electric vehicle EV and the EV operation information includes:
collecting information on at least one EV charging station which charges the electric vehicle using surplus PV power that cannot be output to a power grid due to output curtailment.

14. The method of claim 13, wherein the information on the one or more EV charging station includes at least one of location information of the EV charging station, an amount of PV power that can be supplied, and a power selling price.

15. The method of claim 12, wherein the EV operation information includes at least one of location information, charge state information, and operation state information of the electric vehicle.

16. The method of claim 12, wherein the generating information on the one or more recommended EV charging station includes: selecting one or more EV charging stations that the electric vehicle is able to arrive at among a plurality of EV charging stations as recommended EV charging stations, based on at least one of the location information and charge state information of the electric vehicle.

17. The method of claim 16, wherein the generating the information on the one or more recommended EV charging station includes:
calculating a power transaction price for each of the recommended EV charging stations, based on at least one of an amount of power supply by the recommended EV charging stations and an amount of power demand to the recommended EV charging stations.

18. The method of claim 17, wherein the power transaction price is calculated within a price range that is equal to or higher than a price at which the PV system sells PV power to a power grid and equal to or lower than a general charging price of the EV charging station,
as the amount of power supply is higher, the power transaction price is calculated lower, and
as the amount of power demand is higher, the power transaction price is calculated higher.

19. The method of claim 12, wherein the determining whether to conclude the power transaction includes:
transmitting information on the one or more recommended EV charging station to the EV management apparatus when the electric vehicle is in an operation state.

20. The method of claim 19, wherein the transmitting information on the one or more recommended EV charging station to the EV management apparatus includes:
determining the operation state of the electric vehicle based on at least one of whether the location of the electric vehicle has changed and whether the electric vehicle is connected to an EV charger; and
transmitting information on the one or more recommended EV charging station to the EV management apparatus when the electric vehicle is determined to be in an operation state.

21. The method of claim 19, wherein the providing the route information to the EV management apparatus includes:
generating route guidance information for driving to the EV charging station where the power transaction is concluded and to provide the route guidance information to the EV management apparatus or a route guidance device of the electric vehicle.

22. The method of claim 12, further comprising:
transmitting power transaction result information to a virtual power plant system that requested output curtailment; and
receiving information on compensation costs corresponding to implementation of the output curtailment from the virtual power plant system.
